# EUROPÄISCHE PATENTANMELDUNG

(11) **EP 1 099 597 A1**
(43) Veröffentlichungstag der Anmeldung: **16.05.2001**
(21) Anmeldenummer: 00123087.9
(22) Anmeldetag: 25.10.2000
(51) Int. Cl.: B60P 3/07, B62K 27/00, B62D 63/06

(54) **Vorrichtung zum Abschleppen eines Fahrrades**

(30) Priorität: 10.11.1999 DE 19953897
(71) Anmelder: Duschkewitz, Klaus, 52477 Alsdorf (DE)
(72) Erfinder: Duschkewitz, Klaus, 52477 Alsdorf (DE)
(74) Vertreter: Kohlmann, Kai, Dipl.-Ing.

(57) **Zusammenfassung**

Die Erfindung betrifft eine Abschleppvorrichtung von Fahrrädern mit einer Rahmenkonstruktion, die eine erste lösbare Verbindung zum Verbinden der Vorrichtung mit dem ziehenden Fahrrad und eine zweite lösbaren Verbindung zum Verbinden der Vorrichtung mit dem geschlepptem Fahrrad aufweist, wobei an der Rahmenkonstruktion zwei Laufräder im Abstand zueinander drehbar angeordnet sind.

Damit keine besondere Ausrüstung des geschleppten Fahrrades erforderlich ist, sich die Verbindung zwischen dem ziehenden und dem geschleppten Fahrrad einfacher herstellen läßt und das Gespann ein besseres Fahrverhalten zeigt und dennoch einfacher und preiswerter aufgebaut ist, wird erfindungsgemäß vorgeschlagen, daß die Rahmenkonstruktion ein nach oben offenes Profil umfaßt, dessen Länge eine Aufnahme beider Räder des geschleppten Fahrrades in dem Profil gestattet und dessen Querschnittsgeometrie ein formschlüssiges seitliches Umgreifen der beiden Räder sicherstellt und daß die Rahmenkonstruktion einen in Längsrichtung des Profils schwenkbaren Ausleger aufweist, an dessen freien Ende die zweite lösbare Verbindung angeordnet ist.

## Beschreibung

Die Erfindung betrifft eine Vorrichtung zum Abschleppen eines zweiten Fahrrades hinter einem ersten Fahrrad mit einer Rahmenkonstruktion, die eine erste lösbare Verbindung zum Verbinden der Vorrichtung mit dem ersten Fahrrad und eine zweite lösbare Verbindung zum Verbinden der Vorrichtung mit dem zweiten Fahrrad aufweist, wobei an der Rahmenkonstruktion zwei Laufräder im Abstand zueinander drehbar angeordnet sind.

Fahrradfahren in der Familie ist eine beliebte Freizeitbeschäftigung. Für Familien mit jungen Kindern ist es üblich, daß das Kind in einem Kindersitz mitfährt. Ab einem gewissen Alter ziehen die Kinder es jedoch vor, mit ihrem eigenen Fahrrad mit oder ohne Stützrädern zu fahren. Aufgrund der regelmäßig geringeren Ausdauer der Kinder müssen Fahrradausflüge mit der Familie kurz sein, um das selbst fahrende Kind nicht zu erschöpfen. Um dennoch längere Fahrradausflüge mit Kleinkindern zu ermöglichen, besteht ein Bedürfnis, den Transport des Kinderfahrrades zu ermöglichen, wenn das Kind erschöpft ist.

Aus der DE 197 49 249 ist eine Abschleppvorrichtung für Fahrräder bekannt, bei der über eine Verbindungsstange das vorausfahrende Fahrrad mit dem hinteren Fahrrad verbunden wird. Eine vergleichbare Lösung, bei der allerdings das Vorderrad des geschleppten Fahrzeuges angehoben wird, ergibt sich aus der WO 98/40267. Ferner ist aus der DE 196 34 225 eine Abschleppvorrichtung bekannt, bei der sich das Vorderrad des geschleppten Fahrrades annähernd auf gleicher Höhe mit dem Hinterrad des ziehenden Fahrrades befindet.

Aus der US 5,454,578 ist darüber hinaus bereits eine gattungsgemäße Vorrichtung zum Abschleppen eines zweiten Fahrrades, insbesondere eines Kinderfahrrades hinter einem ersten Fahrrad bekannt geworden. Die Anhängevorrichtung weist eine recht komplexe Rahmenstruktur auf, die von linken und rechten Rahmenstücken, einer horizontalen Querstrebe zwischen den Rahmenstücken, zwei in Fahrtrichtung angeordneten Zugstangen sowie winklig von den Rahmenstücken ausgehenden längenveränderlichen Stützarmen gebildet wird. Die Zugstangen besitzen jeweils einen mittels einer verschieblichen Hülse verschließbaren Schlitz zur Aufnahme eines Verbindungsbolzens, der zuvor an der Vorderradgabel des geschleppten Fahrrades dauerhaft zu befestigen ist. Abhängig von der Lage der Verbindungsbolzen an der Gabel des geschleppten Fahrrades muß die Höhe der die Schlitze aufweisenden Zugstangen an dem Abschleppanhänger justiert werden. Zu diesem Zweck sind die Zugstangen drehbeweglich um die Querstrebe angeordnet und die die Zugstangen stützenden abgewinkelten Stützarme längenveränderlich.

Nach korrekter Höheneinstellung der Zugstangen werden die Verbindunsgbolzen in die Schlitze eingefädelt und dort mittels der Schiebehülse arretiert. Das Vorderrad des geschleppten Fahrrades befindet sich nunmehr zwischen den parallel zueinander angeordneten Zugstangen zwischen den im Abstand zueinander angeordneten Laufrädern. Die Laufräder sind etwa auf gleicher Höhe wie die Vorderradachse des geschleppten Fahrrades an Achsschenkeln angeordnet, die an dem linken und rechten Rahmenstück der Vorrichtung angeordnet sind.

Ist das zu schleppende Fahrrad nicht mit Verbindungsbolzen ausgestattet, scheidet ein Abschleppen mit dieser Vorrichtung aus. Weiterhin ist die Justage der längenveränderlichen Stützarme zur Anpassung an die Größe des geschleppten Fahrrades schwierig, weil die Verbindungsbolzen auf beiden Seiten der Gabel des geschleppten Fahrrades gleichzeitig in die Führungsschlitze der Zugstangen eingefädelt werden müssen.

Da beide Räder des geschleppten Fahrrades zusätzlich zu den beiden Laufrädern der Vorrichtung den Boden berühren, ergeben sich relativ hohe Zugkräfte und ein ungünstiges Eigenlenk-Verhalten des Gespanns. Schließlich ist die bekannte Anhängevorrichtung recht aufwendig konstruiert. Allein die Rahmenkonstruktion besteht aus 10 miteinander verbundenen Bauteilen.

Ausgehend von diesem Stand der Technik liegt der Erfindung daher die Aufgabe zugrunde, eine Vorrichtung der eingangs erwähnten Art zu schaffen, die keine besondere Ausrüstung des geschleppten Fahrrades erfordert, bei der sich die Verbindung zwischen dem ersten ziehenden und dem zweiten geschleppten Fahrrad einfacher herstellen läßt, die ein besseres Fahrverhalten zeigt und dennoch einfacher und preiswerter aufgebaut ist.

Die Lösung dieser Aufgabe basiert auf dem Gedanken, daß keines der Räder des geschleppten Fahrrades mehr den Boden berührt.

Im einzelnen wird die Aufgabe bei einer Vorrichtung der eingangs erwähnten Art dadurch gelöst, daß die Rahmenkonstruktion ein nach oben offenes Profil umfaßt, dessen Länge eine Aufnahme beider Räder des zweiten Fahrrades in dem Profil gestattet und dessen Querschnittsgeometrie ein formschlüssiges seitliches Umgreifen der beiden Räder sicherstellt und daß die Rahmenkonstruktion einen in Längsrichtung des Profils schwenkbaren Ausleger aufweist, an dessen freien Ende die zweite lösbare Verbindung angeordnet ist.

Das in der Länge den Achsabstand des geschleppten Fahrrades übertreffende Profil, insbesondere U-förmige Profil, nimmt beide Räder des geschleppten Fahrrades auf. Die Mäntel der Räder des geschleppten Fahrrades liegen an den senkrechten Schenkeln des U-förmigen Profils seitlich an. Infolgedessen ist das Fahrrad seitlich formschlüssig geführt. Um ein Verrutschen des Fahrrads in Achsrichtung des U-förmigen Profils zu verhindern und eine ausreichende Kippstabilität zu gewährleisten, weist die Rahmenkonstruktion der Vorrichtung den schwenkbaren Ausleger auf, über den die lösbare Verbindung zu dem Hauptrahmen des geschleppten Fahrzeuges herstellbar ist.

In vorteilhafter Ausgestaltung der Erfindung weist der Ausleger zwei an der Rahmenkonstruktion entsprechend den Merkmalen des Anspruchs 2 angeordnete Arme auf, die an ihren gelenkfernen Stirnseiten einander zugewandte muldenförmige Vertiefungen aufweisen. Durch Festdrehen einer die beiden Arme miteinander verbindenden Stellschraube legen sich die muldenförmigen Vertiefungen fest an eine Rahmenstrebe des Hauptrahmens des geschleppten Fahrrades an. Um die Stellschraube ohne Werkzeug festdrehen zu können, weist diese vorzugsweise eine Handhabe, beispielsweise in Form eines Handrades, auf. Mit den beschriebenen Maßnahme ist eine äußerst einfache und rasche Befestigung des geschleppten Fahrrades auf der Vorrichtung bei gleichzeitig guter Seitenführung möglich.

Die in Verbindung mit der Erfindung mögliche durchgehende Achse nach den Merkmalen des Anspruchs 3 erlaubt eine hohe Belastung der Vorrichtung bei gleichzeitig verbessertem Fahrverhalten.

Die Verbindung der Abschleppvorrichtung mit dem ersten, ziehenden Fahrrad kann auf vielfältige Art und Weise erfolgen. Eine Möglichkeit besteht darin, an dem vorderen Ende des U-förmigen Profiles an dessen Unterseite eine gegenüber der Längsachse nach oben abgewinkelte Stange anzuschrauben, die beispielsweise endseitig eine Öse aufweist, die mit einem an dem ziehenden Fahrrad befestigten Haken zusammenwirkt. Dieser Haken läßt sich beispielsweise an der Sattelstange oder an einem, das Hinterrad gabelförmig umgreifenden Ausleger anordnen. Der Ausleger wiederum ist vorzugsweise nahe der Hinterachse des ziehenden Fahrrades befestigt. Alternativ kann der Haken auch seitlich an dem ziehenden Fahrrad angeordnet sein. Dies erhöht allerdings die Gesamtbreite des Gespanns.

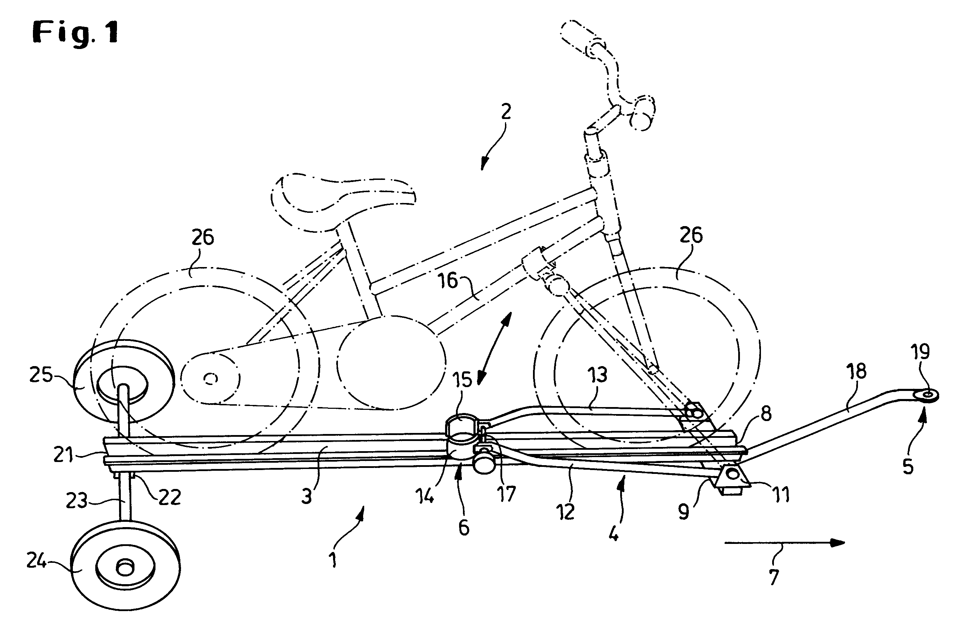

Nachfolgend wird die Erfindung anhand der Figur näher erläutert, die eine erfindungsgemäße Abschleppvorrichtung in perspektivischer Ansicht zeigt:

Die insgesamt mit 1 bezeichnete Vorrichtung zum Abschleppen eines zweiten Fahrrades 2 wird von einer Rahmenkonstruktion gebildet, die im wesentlichen ein nach oben offenes U-förmiges Profil 3, einen schwenkbaren Ausleger 4 sowie zwei lösbare Verbindungen 5, 6 aufweist.

An dem in Fahrtrichtung 7 vorderen Ende 8 des U-förmigen Profils 3 ist an dessen Unterseite eine Trägerplatte 9 befestigt. Abgewinkelte Abschnitte 11 der Trägerplatte 9 sind gelenkig mit denen den schwenkbaren Ausleger 4 bildenden Armen 12, 13 verbunden.

An der gelenkfernen Stirnseite gehen die Arme 12, 13 in muldenförmige Klemmbacken 14, 15 über, deren Radius etwa dem Radius der Zentralstrebe 16 des Rohrrahmens des zweiten Fahrrades 2 entspricht. Knapp unterhalb der Klemmbacken 14, 15 weisen die Arme 12, 13 miteinander fluchtende Durchgänge zur Aufnahme einer von einer nicht sichtbaren Mutter gehaltenen Stellschraube 17 auf.

An der Trägerplatte 9 ist darüber hinaus eine Zugstrebe 18 angeschraubt, an deren Ende sich eine Öse 19 befindet, in die ein an dem nicht dargestellten ersten Fahrrad montierter Haken eingreift. Selbstverständlich liegt es im Rahmen der Erfindung, anstelle der Haken-/Öseverbindung auf beliebige andere Kupplungen zwischen der Vorrichtung zum Abschleppen 1 und dem ersten Fahrrad zurückzugreifen. In Betracht kommen insbesondere an sich bekannte, an der Sattelstange zu befestigende Kupplungen zur lösbaren Verbindung der Abschleppvorrichtung an dem ziehenden ersten Fahrrad.

An dem in Fahrtrichtung 7 hinteren Ende 21 des U-förmigen Profils 3 befindet sich an dessen Unterseite eine nur schematisch dargestellte Achsaufnahme 22 für eine durchgehende Achse 23, die zwei Laufräder 24, 25 trägt.

Zum Abschleppen wird zunächst das zweite Fahrrad 2 mit beiden Rädern 26 in das U-förmige Profil 3 gestellt. Wie aus der Figur zu erkennen, ist die Querschnittsgeometrie des Profils 3 so gewählt, daß die Mäntel der Räder 26 seitlich an den nach oben zeigenden Schenkeln des U-förmigen Profils 3 anliegen. Der schwenkbare Ausleger 4 wird in die in der Figur gestrichelt dargestellte Position geschwenkt. Die Klemmbacken 14, 15 werden an die schrägstehende Zentralstrebe 16 angelegt und die Stellschraube 17 mit dem Handrad angezogen.

Zur weiteren Erhöhung der Sicherheit können die Räder 26 mit in der Figur nicht dargestellten Halteriemen an dem U-förmigen Profil 3 festgezurrt werden.

Je nach Ausführung kann das Kind auf dem Fahrrad 2 auf der Abschleppvorrichtung 1 sitzen oder in einem auf dem ersten, ziehenden Fahrrad zu montierenden Kindersitz mitfahren. Soll das Kind auf der Abschleppvorrichtung 1 mitfahren, ist durch eine hinreichende Breite der Trägerplatte 9 und entsprechende Dimensionierung des Auslegers 4 dafür Sorge zu tragen, daß das Fahrrad 2 hinreichend kippstabil auf der Vorrichtung steht. Außerdem ist der Neigungswinkel des U-förmigen Profils gegenüber der Aufstandsfläche möglichst klein zu wählen. Dies läßt sich durch eine entsprechend tiefe Anordnung des Hakens an dem ziehenden Fahrrad und/oder eine entsprechende Abwinklung der Zugstange 18 gegenüber dem U-förmigen Profil 3 erreichen.

Die Figur verdeutlicht den einfachen Aufbau der Abschleppvorrichtung, die lediglich aus sechs Rahmenbauteilen besteht, nämlich dem U-förmigen Profil 3, der Trägerplatte 9, zwei Auslegerarmen 12, 13, einer Achsaufnahme 22 sowie der Zugstange 18. Trotz dieses konstruktiv einfachen Aufbaus weist diese Vorrichtung gegenüber dem Stand der Technik ein deutlich verbessertes Fahrverhalten auf, da das geschleppte Fahrrad keinen Bodenkontakt hat.

| Bezugszeichenliste: | |
|---|---|
| Nr. | Bezeichnung |
| 1. | Vorrichtung zum Abschleppen |
| 2. | Zweites Fahrrad |
| 3. | U-förmiges Profil |
| 4. | Schwenkbaren Ausleger |
| 5. | Erste lösbare Verbindung |
| 6. | Zweite lösbare Verbindung |
| 7. | Fahrtrichtung |
| 8. | Vorderes Ende |
| 9. | Trägerplatte |
| 10. | --- |
| 11. | Abgewinkelte Abschnitte |
| 12. | Arm |
| 13. | Arm |
| 14. | Klemmbacken |
| 15. | Klemmbacken |
| 16. | Zentralstrebe |
| 17. | Stellschraube |
| 18. | Zugstrebe |
| 19. | Öse |
| 20. | ---- |
| 21. | Hinteres Ende |
| 22. | Achsaufnahme |
| 23. | Durchgehende Achse |
| 24. | Laufrad |
| 25. | Laufrad |
| 26. | Räder |

## Patentansprüche

1. Vorrichtung zum Abschleppen eines zweiten Fahrrades hinter einem ersten Fahrrad mit einer Rahmenkonstruktion, die eine erste lösbare Verbindung zum Verbinden der Vorrichtung mit dem ersten Fahrrad und eine zweite lösbaren Verbindung zum Verbinden der Vorrichtung mit dem zweiten Fahrrad aufweist, wobei an der Rahmenkonstruktion zwei Laufräder im Abstand zueinander drehbar angeordnet sind, **dadurch gekennzeichnet,**
- daß die Rahmekonstruktion ein nach oben offenes Profil (3) umfaßt, dessen Länge eine Aufnahme beider Räder (26) des zweiten Fahrrades (2) in dem Profil gestattet und dessen Querschnittsgeometrie ein formschlüssiges seitliches Umgreifen der beiden Räder sicherstellt und
- daß die Rahmenkonstruktion einen in Längsrichtung des Profils schwenkbaren Ausleger (4) aufweist, an dessen freien Ende die zweite lösbare Verbindung (6) angeordnet ist.

2. Vorrichtung nach Anspruch 1, **dadurch gekennzeichnet,** daß an dem in Fahrtrichtung (7) vorderen Ende (8) des U-förmigen Profils (3) an dessen Unterseite eine Trägerplatte (9) befestigt ist, die zu beiden Seiten über das U-förmige Profil hinausragt und an deren seitlichen Rändern (11) jeweils ein Arm (12,13) des Auslegers (4) angelenkt ist, wobei einander zugewandte muldenförmige Vertiefungen (14,15) an der gelenkfernen Strirnseite jedes Armes (12,13) mittels eines Verbindungselementes (17) gegeneinader beweg- und feststellbar sind.

3. Vorrichtung nach Anspruch 1 oder 2, **dadurch gekennzeichnet ,** daß an dem in Fahrtrichtung (7) hinteren Ende (21) des U-förmigen Profils (3) an dessen Unterseite eine Achsaufnahme (22) für eine durchgehende Achse (23) für die beiden Laufräder (24,25) befestigt ist.

4. Vorrichtung nach Anspruch 1, **dadurch gekennzeichnet,** daß an dem in Fahrtrichtung (7) vorderen Ende (8) des U-förmigen Profils (3) an dessen Unterseite eine vorzugsweise gegenüber der Längsachse des Profils noch oben abgewinkelte Stange (18) befestigt ist, die endseitig die erste lösbare Verbindung(5) als Haken/Öse Verbindung aufweist.
